(19) **Europäisches Patentamt**

**European Patent Office**

**Office européen des brevets**

(11) **EP 1 640 195 A2**

(12) **EUROPEAN PATENT APPLICATION**

(43) Date of publication:
29.03.2006 Bulletin 2006/13

(51) Int Cl.:
*B60H 1/00* (2006.01)   *B60H 1/32* (2006.01)

(21) Application number: 05255741.0

(22) Date of filing: 15.09.2005

| | |
|---|---|
| (84) Designated Contracting States: AT BE BG CH CY CZ DE DK EE ES FI FR GB GR HU IE IS IT LI LT LU LV MC NL PL PT RO SE SI SK TR Designated Extension States: AL BA HR MK YU | (72) Inventors: • **Suzuki, Kenichi** **c/o Sanden Corporation** **Isesaki-shi** **Gunma 372-8502 (JP)** • **Inoue, Atsuo** **c/o Sanden Corporation** **Isesaki-shi** **Gunma 372-8502 (JP)** |
| (30) Priority: 27.09.2004 JP 2004279031 28.09.2004 JP 2004281216 | |
| (71) Applicant: **Sanden Corporation** **Isesaki-shi,** **Gunma 372-8502 (JP)** | (74) Representative: **Haley, Stephen** **Gill Jennings & Every LLP** **Broadgate House** **7 Eldon Street** **London EC2M 7LH (GB)** |

(54) **Control device**

(57)    A control device includes a control object control means, a control object control amount estimation means, a control object control amount target value setting means, a control input calculation means, a control object control amount target response calculation means, a control object control amount feedback control input calculation means, and a control object feedforward control input calculation means, wherein the control amount target response, the feedback control input and the feedforward control input are calculated by the respective means, the control input is calculated by the control input calculation means referring to the sum of the feedback and feedforward control inputs, and the control amount of the control object is controlled by the control object control means. A simple control device, suitable for an air conditioning unit for vehicles, is provided, which can prevent an overshooting and a response delay in control of an evaporator temperature and/or a compressor torque, and which can improve the comfortableness by estimating the transient state of the control amount in an optimum manner.

FIG. 1

EP 1 640 195 A2

**Description**

The present invention relates to a control device, and, more specifically, to a control device which calculates and outputs a control input value depending on a target value and controls a control object by estimating a control amount from a detected amount different from the control amount and using the estimated value to a feedback control and which is suitable particularly for control of a compressor torque or/and an evaporator temperature in a refrigeration cycle having a variable displacement compressor being controlled by an external control signal by controlling the displacement of the compressor.

A control device, capable of being applied to an automatic air conditioning system of an air conditioning unit for vehicles, is disclosed in JP-A-2003-191741. In this control device, a control object output target response calculation means for calculating and designating a target response in a transient state at which an output value of a control object reaches a target value, a feedforward control input estimation means for estimating a feedforward control input realizing a value of the control object output target response, and a control object output feedback means for calculating a deviation between the control object output target response and a control object output, are provided, and the control object is controlled by using the sum of the feedforward control input and a feedback control input as a control input to be inputted into the control object.

Further, a control device is also known, wherein, when a control amount used for the purpose of the control of the control object cannot be directly detected, a control to a control target value can be carried out by estimating a control amount from a certain detected value of the control object, carrying out a feedback control referring to the estimated control amount.

However, as described above, in the conventional control device wherein, when a control amount used for the purpose of the control of the control object cannot be directly detected, a control amount is estimated from a certain detected value of the control object and a feedback control to a target value is carried out, although a control of the control object to the target value may be possible, it is considered that a control considering a response property cannot be performed.

Further, when a plurality of control purposes exist for a single control object, if the control method such as that disclosed in JP-A-2003-191741 is employed by the feedback of one of a plurality of control object output values (control amounts), a control system satisfying the plurality of control purposes cannot be established. Further, in a case where it is required to differentiate respective output response values for the plurality of control amounts of the control object from each other, it is considered that the control device disclosed in JP-A-2003-191741 cannot deal.

Accordingly, it would be desirable to provide a control device which can perform a control in consideration of response property to a target value, thereby achieving a more optimum control, similarly to a control disclosed in JP-A-2003-191741, and in which, while its control system is simple, an estimated value or values of a control object control amount or control amounts are served to a feedback control, a control object control amount target response calculation means is provided, a value or values of target response is controlled, a control object output or outputs are controlled more properly without overshooting, thereby establishing a control system capable of achieving a more optimum control or controls with an optimum response property or optimum response properties.

Further, it would be desirable to be able to establish such a control system at a low cost, because a new detection means is not required by using an estimated value or values.

A control device according to the present invention includes a control object control means for operating a control object based on a control input and controlling a control amount of the control object, a control object control amount estimation means for estimating a control amount of the control object, a control object control amount target value setting means for setting a control amount target value of the control object, a control input calculation means for calculating a control input to be inputted into the control object, a control object control amount target response calculation means for calculating and designating a target response in a transient state at which the control amount of the control object reaches the control amount target value, a control object control amount feedback control input calculation means for calculating a feedback control input referring to a deviation between a value of the control object control amount target response and the control amount of the control object, and a control object feedforward control input calculation means for calculating a feedforward control input necessary to realize a transient state in a target response calculated by the control object control amount target response calculation means, and is characterized in that the control amount target value of the control object is set by the control object control amount target value setting means, the value of the control amount target response is calculated by the control object control amount target response calculation means, the feedback control input is calculated by the control object control amount feedback control input calculation means referring to the value of the control amount target response and the control amount estimated by the control object control amount estimation means, the feedforward control input is calculated by the control object feedforward control input calculation means, the control input is calculated by the control input calculation means referring to the sum of the feedback control input and the feedforward control input, and the control amount of the control object is controlled by the control object control means.

In this control device, the control object control amount estimation means may estimate the control amount of the control object from a physical value having a correlation with the control amount of the control object.

Such a control device is suitable as a compressor torque control device, particularly, as a compressor torque control device used for a refrigeration cycle in an air conditioning system for vehicles. Namely, the present invention also provides a compressor torque control device including a refrigeration cycle having a variable displacement compressor for refrigerant whose displacement is controlled by an external control signal, a condenser for condensing high-temperature and high-pressure refrigerant and an evaporator for refrigerant for functioning as a cooler cooling air blown into a room interior (a vehicle interior), a blower for sending air to the evaporator, a displacement control means for controlling the displacement of the compressor, a displacement control signal calculation means for calculating a displacement control signal sent to the displacement control means, a torque target value setting means for calculating and setting a torque target value of the compressor, a torque recognition means for estimating or detecting a torque of the compressor, a torque target response calculation means for calculating and designating a target response in a transient state at which the torque of the compressor reaches the torque target value, a torque feedback control input calculation means for calculating a torque feedback control input referring to a recognized torque value of the compressor and a value of the torque target response, and a torque feedforward control input calculation means for calculating a torque feedforward control input necessary to realize a transient state in a target response calculated by the torque target response calculation means, characterized in that the torque target value of the compressor is set by the torque target value setting means, the value of the torque target response is calculated by the torque target response calculation means, the torque feedback control input is calculated by the torque feedback control input calculation means referring to a deviation between the value of the torque target response and the recognized torque value estimated or detected by the torque recognition means, the torque feedforward control input is calculated by the torque feedforward control input calculation means, a control input for controlling the displacement of the compressor is calculated by the displacement control signal calculation means referring to the sum of the torque feedback control input and the torque feedforward control input, and outputted to the displacement control means, and a torque of the compressor as a control amount is controlled by the displacement control means.

In this compressor torque control device, the torque recognition means may estimate the torque of the compressor from a physical value having a correlation with the torque of the compressor.

Further, the torque recognition means may estimate the torque of the compressor from a thermal load of the refrigeration cycle and a physical value having a correlation with the torque of the compressor.

In such a compressor torque control device, the torque target value setting means may calculate the torque target value referring to a target temperature of the evaporator and a thermal load of the refrigeration cycle.

Further, the torque target value setting means may set the torque target value referring to a torque demand from a vehicle. In particular, the torque target value of the compressor is set referring to a torque demand from a vehicle, the method for calculating the value of the torque target response in the torque target response calculation means may be changed to a method different from that at a usual time, and a target transient response for torque may be changed to a transient response different from that at a usual time.

Further, the physical value having a correlation with the torque of the compressor may be at least one of a compressor discharge pressure, a condenser entrance pressure, a condenser exit pressure, an evaporator temperature and an evaporator exit air temperature.

The above-described thermal load of the refrigeration cycle may be determined by detecting all of or at least one of a physical value having a correlation with an outside air temperature, a physical value having a correlation with an amount of air sent to the evaporator, a physical value having a correlation with a running speed of a vehicle, a physical value having a correlation with a rotational speed of a drive source for a vehicle and a physical value having a correlation with an amount of air sent to the condenser.

In such a compressor torque control device, the variable displacement compressor may be a variable displacement compressor controlled by controlling a displacement control signal or a variable displacement compressor controlled by controlling its rotational speed.

In the present invention, a control system satisfying a plurality of control purposes can be established. Namely, a control device according to the present invention includes a control object control means for operating a control object based on a control input and controlling a control amount of the control object, a control object first control amount detection means for detecting a first control amount of the control object, a control object second control amount estimation means for estimating or detecting a second control amount of the control object, a control object first control amount target value setting means for setting a first control amount target value of the control object, a control object second control amount target value setting means for setting a second control amount target value of the control object, a control input calculation means for calculating a control input to be inputted into the control object, a control object first control amount target response calculation means for calculating and designating a target response in a transient state at which the first control amount of the control object reaches the first control amount target value, a control object first control amount feedback control input calculation means for calculating a feedback first control input referring to a deviation between a value of the control object first control amount target response and the first control amount of the control object, a control object second control amount feedback control input calculation means for calculating a feedback second control input referring to a deviation between the second control amount target value of the control object and the second control amount of the control object, a control object first feedforward control input calculation means for calculating a feedforward first control input necessary to realize a transient state in a target response calculated by the control object first control amount target response calculation means, and a control object second feedforward control input calculation means for calculating a feedforward second control input necessary to realize the second control amount target value calculated by the control object second control amount target value setting means, and is characterized in that the first control amount target value of the control object is set by the control object first control amount target value setting means, the value of the first control amount target response is calculated by the control object first control amount target response calculation means, the feedback first control input is calculated by the control object first control amount feedback control input calculation means referring to the value of the first control amount target response and the first control amount detected by the control object first control amount detection means, the feedforward first control input is calculated by the control object first feedforward control input calculation means, the second control amount target value of the control object is set by the control object second control amount target value setting means referring to the sum of the feedback first control input and the feedforward first control input, the feedback second control input is calculated by the control object second control amount feedback control input calculation means referring to the second control amount target value and the second control amount estimated or detected by the control object second control amount estimation means, the feedforward second control input is calculated by the control object second feedforward control input calculation means, the control input is calculated by the control input calculation means referring to the sum of the feedback second control input and the feedforward second control input, and the first and second control amounts of the control object are controlled by the control object control means.

Another control device according to the present invention includes a control object control means for operating a control object based on a control input and controlling a control amount of the control object, a control object first control amount detection means for detecting a first control amount of the control object, a control object second control amount estimation means for estimating or detecting a second control amount of the control object, a control object first control amount target value setting means for setting a first control amount target value of the control object, a control object second control amount target value setting means for setting a second control amount target value of the control object, a control input calculation means for calculating a control input to be inputted into the control object, a control object first control amount target response calculation means for calculating and designating a target response in a transient state at which the first control amount of the control object reaches the first control amount target value, a control object second control amount target response calculation means for calculating and designating a target response in a transient state at which the second control amount of the control object reaches the second control amount target value, a control object first control amount feedback control input calculation means for calculating a feedback first control input referring to a deviation between a value of the control object first control amount target response and the first control amount of the control object, a control object second control amount feedback control input calculation means for calculating a feedback second control input referring to a deviation between a value of the control object second control amount target response and the second control amount of the control object, a control object first feedforward control input calculation means for calculating a feedforward first control input necessary to realize a transient state in a target response calculated by the control object first control amount target response calculation means, and a control object second feedforward control input calculation means for calculating a feedforward second control input necessary to realize a transient state in a target response calculated by the control object second control amount target response calculation means, and is characterized in that the first control amount target value of the control object is set by the control object first control amount target value setting means, the value of the first control amount target response is calculated by the control object first control amount target response calculation means, the feedback first control input is calculated by the control object first control amount feedback control input calculation means referring to the value of the first control amount target response and the first control amount detected by the control object first control amount detection means, the feedforward first control input is calculated by the control object first feedforward control input calculation means, the second control amount target value of said control object is set by the control object second control amount target value setting means referring to the sum of said feedback first control input and the feedforward first control input, the value of the second control amount target response is calculated by the control object second control amount target response calculation means, the feedback second control input is calculated by the control object second control amount feedback control input calculation means referring to the value of the second control amount target response and the second control amount estimated or detected by the control object second control amount estimation means, the feedforward second control input is calculated by the control object second feedforward control input calculation means, the control input is calculated by the control input calculation means referring to the sum of the feedback second control input and the feedforward second control input, and the first and second control amounts of the control object are controlled by the control object control means.

In such control devices, the control object second control amount estimation means may estimate the second control amount of the control object from a physical value having a correlation with the second control amount of the control object.

Such control devices are suitable as a refrigeration cycle control device controlling a compressor torque, particularly, as a refrigeration cycle control device in an air conditioning system for vehicles. Namely, the present invention also provides the following refrigeration cycle control devices. A refrigeration cycle control device according to the present invention includes a refrigeration cycle having a variable displacement compressor for refrigerant whose displacement is controlled by an external control signal, a condenser for condensing high-temperature and high-pressure refrigerant and an evaporator for refrigerant for functioning as a cooler cooling air blown into a room interior (a vehicle interior), a blower for sending air to the evaporator, an evaporator target temperature setting means for setting a target temperature of the evaporator, an evaporator temperature detection means for detecting an evaporator temperature or an evaporator exit air temperature, an evaporator temperature control means for controlling an evaporator temperature, an evaporator temperature target response calculation means for calculating and designating a target response in a transient state at which the evaporator temperature or evaporator exit air temperature reaches the target temperature of the evaporator, an evaporator temperature feedback control input calculation means for calculating an evaporator temperature feedback control input referring to a deviation between a value of the evaporator temperature target response and the evaporator temperature or evaporator exit air temperature, an evaporator temperature feedforward control input estimation means for estimating an evaporator temperature feedforward control input necessary to realize a transient state in a target response calculated by the evaporator temperature target response calculation means, a torque target value setting means for calculating and setting a torque target value of the compressor, a torque recognition means for estimating or detecting a torque of the compressor, a torque feedback control input calculation means for calculating a torque feedback control input of the compressor referring to a recognized torque value of the compressor and a torque target value of the compressor, a torque feedforward control input estimation means for estimating a torque feedforward control input of the compressor necessary to realize a torque target value calculated by the torque target value setting means, a displacement control means for controlling the displacement of the compressor, and a displacement control signal calculation means for calculating a displacement control signal sent to the displacement control means, and is characterized in that the target temperature of the evaporator is set by the evaporator target temperature setting means, the value of the evaporator temperature target response is calculated by the evaporator temperature target response calculation means, the evaporator temperature feedback control input is calculated by the evaporator temperature feedback control input calculation means referring to a deviation between the value of the evaporator temperature target response and the evaporator temperature or evaporator exit air temperature detected by the evaporator temperature detection means, the evaporator temperature feedforward control input is estimated by the evaporator temperature feedforward control input estimation means, the torque target value is calculated and set by the torque target value setting means referring to the sum of the evaporator temperature feedback control input and the evaporator temperature feedforward control input, the torque feedback control input is calculated by the torque feedback control input calculation means referring to the torque target value and the recognized torque value of the compressor estimated or detected by the torque recognition means, the torque feedforward control input is calculated by the torque feedforward control input calculation means, a control input for controlling the displacement of the compressor is calculated by the displacement control signal calculation means referring to the sum of the torque feedback control input and the torque feedforward control input, and outputted to the displacement control means, and an evaporator temperature or an evaporator exit air temperature and a torque of the compressor are controlled as control amounts.

Another refrigeration cycle control device according to the present invention includes a refrigeration cycle having a variable displacement compressor for refrigerant whose displacement is controlled by an external control signal, a condenser for condensing high-temperature and high-pressure refrigerant and an evaporator for refrigerant for functioning as a cooler cooling air blown into a room interior (a vehicle interior), a blower for sending air to the evaporator, an evaporator target temperature setting means for setting a target temperature of said evaporator, an evaporator temperature detection means for detecting an evaporator temperature or an evaporator exit air temperature, an evaporator temperature control means for controlling an evaporator temperature, an evaporator temperature target response calculation means for calculating and designating a target response in a transient state at which the evaporator temperature or evaporator exit air temperature reaches the target temperature of the evaporator, an evaporator temperature feedback control input calculation means for calculating an evaporator temperature feedback control input referring to a deviation between a value of the evaporator temperature target response and the evaporator temperature or evaporator exit air temperature, an evaporator temperature feedforward control input estimation means for estimating an evaporator temperature feedforward control input necessary to realize a transient state in a target response calculated by the evaporator temperature target response calculation means, a torque target value setting means for calculating and setting a torque target value of the compressor, a torque target response calculation means for calculating and designating a target response in a transient state at which the torque of the compressor reaches the torque target value, a torque recognition means for estimating or detecting a torque of the compressor, a torque feedback control input calculation means for calculating a torque feedback control input of the compressor referring to a recognized torque value of the compressor and a value of the torque target response of the compressor, a torque feedforward control input estimation means for estimating a torque feedforward control input of the compressor necessary to realize a transient state in a target response calculated by the torque target response calculation means, a displacement control means for controlling the displacement of the compressor, and a displacement control signal calculation means for calculating a displacement control signal sent to the displacement control means, and is characterized in that the target temperature of the evaporator is set by the evaporator target temperature setting means, the value of the evaporator temperature target response is calculated by the evaporator temperature target response calculation means, the evaporator temperature feedback control input is calculated by the evaporator temperature feedback control input calculation means referring to a deviation between the value of the evaporator temperature target response and the evaporator temperature or evaporator exit air temperature detected by the evaporator temperature detection means, the evaporator temperature feedforward control input is estimated by the evaporator temperature feedforward control input estimation means, the torque target value is calculated and set by the torque target value setting means referring to the sum of the evaporator temperature feedback control input and the evaporator temperature feedforward control input, the value of the torque target response is calculated by the torque target response calculation means, the torque feedback control input is calculated by the torque feedback control input calculation means referring to the value of the torque target response and the recognized torque value of the compressor estimated or detected by the torque recognition means, the torque feedforward control input is calculated by the torque feedforward control input calculation means, a control input for controlling the displacement of the compressor is calculated by the displacement control signal calculation means referring to the sum of the torque feedback control input and the torque feedforward control input, and outputted to the displacement control means, and an evaporator temperature or an evaporator exit air temperature and a torque of the compressor are controlled as control amounts.

In the above-described refrigeration cycle control devices, the torque recognition means may estimate the torque of the compressor from a physical value having a correlation with the torque of the compressor.

Further, the torque recognition means may estimate the torque of the compressor from a thermal load of the refrigeration cycle and a physical value having a correlation with the torque of the compressor.

Further, the above-described torque target value setting means may set the torque target value referring to the sum of the evaporator temperature feedback control input and the evaporator temperature feedforward control input and a thermal load of the refrigeration cycle.

Further, the torque target value setting means may set the torque target value referring to a torque demand from a vehicle. In particular, the torque target value of the compressor may be set referring to a torque demand from a vehicle, the method for calculating the value of the torque target response in the torque target response calculation means may be changed to a method different from that at a usual time, and a target transient response for torque may be changed to a transient response different from that at a usual time.

Further, the physical value having a correlation with the torque of the compressor may be at least one of a compressor discharge pressure, a condenser entrance pressure, a condenser exit pressure, an evaporator temperature and an evaporator exit air temperature.

Further, the above-described thermal load of the refrigeration cycle may be determined by detecting all of or at least one of a physical value having a correlation with an outside air temperature, a physical value having a correlation with an amount of air sent to the evaporator, a physical value having a correlation with a running speed of a vehicle, a physical value having a correlation with a rotational speed of a drive source for a vehicle and a physical value having a correlation with an amount of air sent to the condenser.

In such refrigeration cycle control devices, the variable displacement compressor may be a variable displacement compressor controlled by controlling a displacement control signal or a variable displacement compressor controlled by controlling its rotational speed.

In the above-described control device according to the present invention, particularly, in the compressor torque control device according to the present invention, the control amount of the control object (for example, the torque of the compressor) can be controlled at a more optimum condition, and by giving an appropriate response property, a control to a target value with a desirable response becomes possible without overshooting and response delay, thereby reducing a torque shock and stabilizing the torque. Further, because the compressor torque is controlled using an estimated torque value of the compressor, a refrigeration cycle system for torque control can be made at a low cost.

In the other control device according to the present invention, particularly, in the refrigeration cycle control device according to the present invention, a plurality of the control amounts of the control objects, in particular, the temperature of the evaporator and the torque of the compressor, can be controlled at the same time, and by giving respective target response properties to the respective controls, they can be accurately controlled, respectively, with respective desirable response conditions. Further, because the compressor torque is controlled using an estimated torque value of the compressor, a torque shock may be reduced and the torque may be stabilized, and because the evaporator temperature is also stabilized, the drivability and the comfortableness may both stand. Consequently, a refrigeration cycle system for controlling an optimum compressor torque can be made at a low cost.

Further features and advantages of the present invention will be understood from the following detailed description of the preferred embodiments of the present invention with reference to the accompanying figures, of which:

Fig. 1 is a schematic diagram of an air conditioning unit for vehicles including a compressor torque control device as a control device according to a first embodiment of the present invention.

Fig. 2 is a block diagram showing an example of the control in the air conditioning unit depicted in Fig. 1.

Fig. 3 is a block diagram showing another example of the control in the air conditioning unit depicted in Fig. 1.

Fig. 4 is a flowchart for carrying out the control depicted in Fig. 2.

Fig. 5 is a block diagram showing a control in a refrigeration cycle control device as a control device according to a second embodiment of the present invention.

Fig. 6 is a flowchart for carrying out the control depicted in Fig. 5.

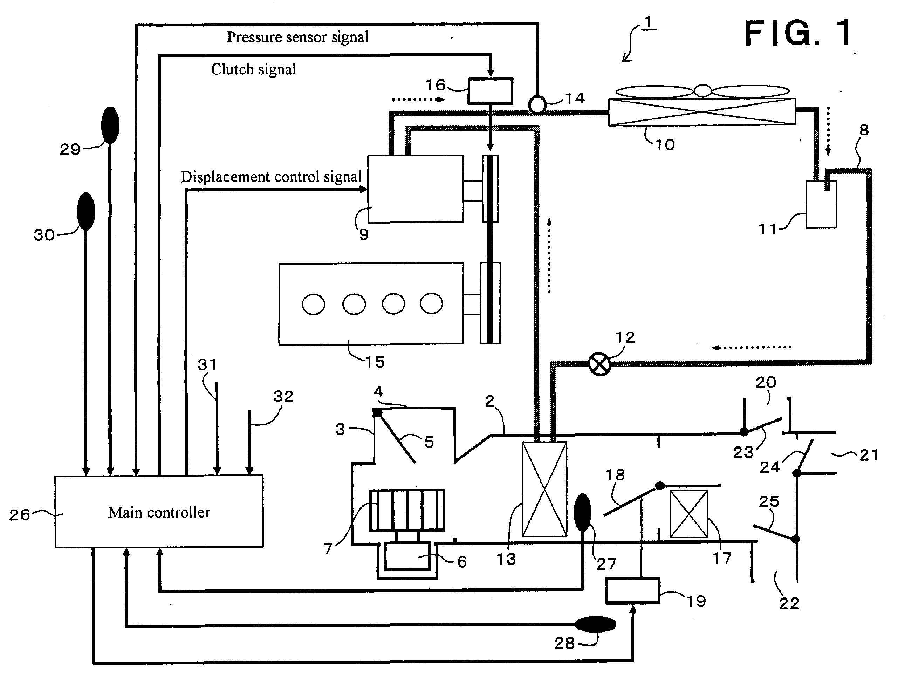

Fig. 1 shows a schematic constitution of an air conditioning unit for vehicles including compressor torque control device as a control device according to a first embodiment of the present invention. This Fig. 1 is common to a second embodiment of the present invention described later. In Fig. 1, label 1 shows a mechanical part of the air conditioning unit for vehicles. A switching damper 5 is provided at the entrance side of an air duct 2 for controlling the ratio of the amount of air sucked from inside air introduction port 3 to the amount of air sucked from outside air introduction port 4. The introduced air is sucked and sent into air duct 2 by blower 7 driven by motor 6. The amount of air sent by blower 7 is adjusted by controlling motor 6.

A refrigeration cycle 8, in which refrigerant is circulated, comprises a variable displacement compressor 9 whose displacement as a control object is controlled by an external control signal (a displacement control signal), a condenser 10 for condensing high-temperature and high-pressure refrigerant compressed by compressor 9, a receiver 11 for separating the refrigerant condensed by condenser 10 into gaseous and liquid phases, an expansion valve 12 for expanding the refrigerant sent from receiver 11, and an evaporator 13 (a cooler) for evaporating the refrigerant sent from expansion valve 12 and cooling air blown into a room interior (a vehicle interior). In this embodiment, a pressure sensor 14 is provided at a position between compressor 9 and condenser 10 in the refrigeration circuit for detecting a discharge pressure of compressor 9 or a suction pressure of condenser 10. Compressor 9 is driven by an engine 15 provided as a drive source for running a vehicle, and the transmission of the drive force can be controlled by a clutch controller 16.

Evaporator 13 is provided as a cooler at a position downstream of blower 7 in air duct 2, and a heater core 17 is provided as a heater at a position downstream thereof. Air mixing damper 18 is provided at a position immediately upstream of heater 17. A ratio of an amount of air passing through heater 17 to that bypassing the heater 17 is controlled by adjusting an opening degree of air mixing damper 18 operated by air mixing damper actuator 19. The temperature conditioned air is sent into an interior of a vehicle through respective air discharge ports 20, 21 and 22 (for example, DEF mode air discharge port 20, VENT mode air discharge port 21 and FOOT mode air discharge port 22). Respective dampers 23, 24 and 25 are provided for the control of the opening/closing operation of respective air discharge ports 20, 21 and 22.

The above-described displacement control signal for compressor 9 is sent from main controller 26, clutch controller 16 is controlled based on a clutch signal sent from main controller 26, and air mixing damper actuator 19 is controlled by an operation signal sent from main controller 26. To main controller 26, a signal of a pressure detected by pressure sensor 14 (a pressure sensor signal), a detected signal from cooler exit air temperature sensor 27 provided at the exit side of cooler 13 (evaporator), a detected signal from inside air temperature sensor 28, a detected signal from outside air temperature sensor 29, a detected signal from sunshine sensor 30, an engine rotational speed signal 31 and a vehicle running speed signal 32 are sent.

The above-described compressor 9 can form a refrigeration cycle irrelevant to the presence of the clutch. Further, the type for its displacement control is not particularly limited. However, the displacement control signal has a correlation with the displacement of compressor 9. Furthermore, the control of the exit air temperature of evaporator 13 provided as a cooler is carried out by the displacement control signal of compressor 9.

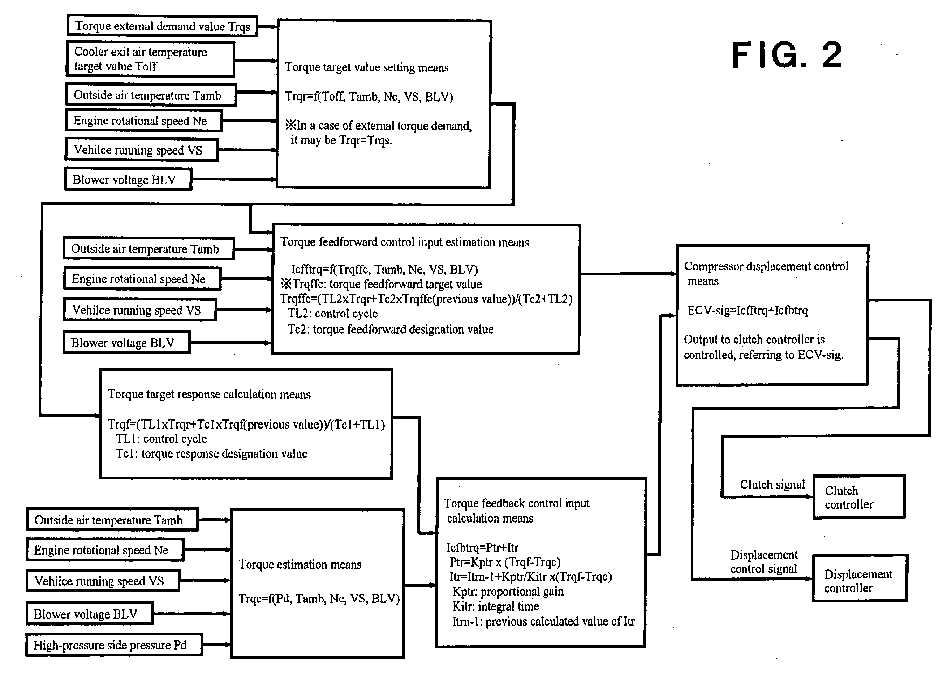

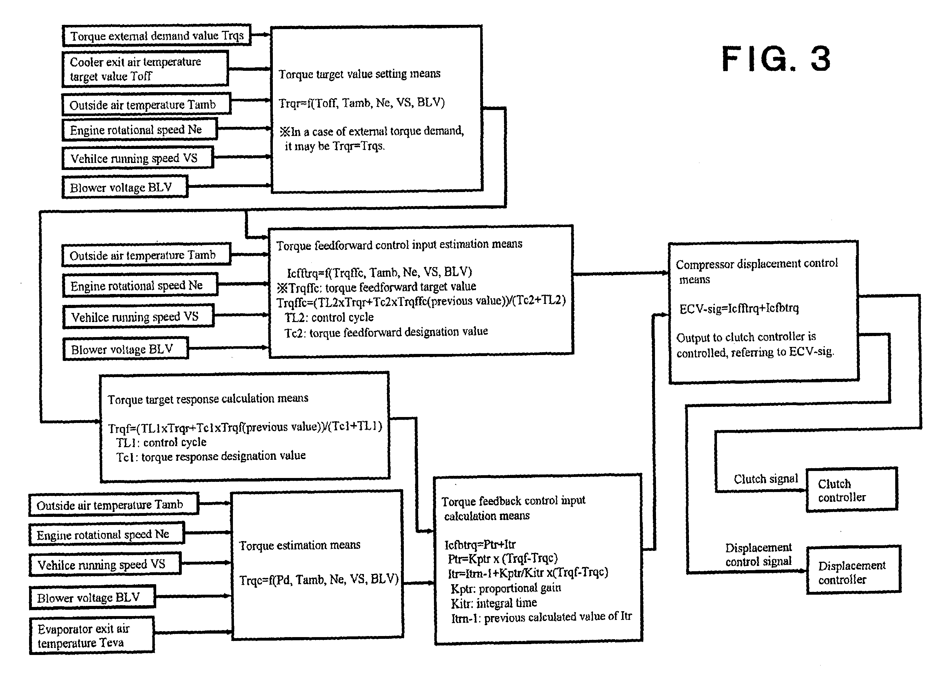

Using the above-described system, in main controller 26, the control according to the present invention is carried out, for example, as shown in Fig. 2 (Example 1) or as shown in Fig. 3 (Example 2). In these examples, the compressor torque controls are carried out as follows. The control will be explained mainly referring to Fig. 2.

(1) Torque target value setting means:

The torque target value (Trqr) is calculated by the following equation, referring to a cooler exit air temperature target value (Toff), an outside air temperature (Tamb), an engine rotational speed (Ne), a vehicle running speed (VS) and a blower voltage (BLV).

$$Trqr = f(Toff, Tamb, Ne, VS, BLV)$$

Alternatively, a demand from a vehicle side (a torque demand from outside) Trqs may be used as the torque target value.

$$Trqr = Trqs$$

(2) Torque target response calculation means:

A value of torque target response (Trqf) is calculated by the following equation, referring to torque target value (Trqr).

$$Trqf = (TL1 \times Toff + Tc1 \times Tef \text{ (a previous value)})/(Tc1 + TL1)$$

Where,

TL1: control cycle
Tc1: torque response designation value

(3) Torque feedforward control input calculation (estimation) means:

The torque feedforward control input (Icfftrq) is estimated by the following equation, referring to a torque feedforward target value (Trqffc), an outside temperature (Tamb), an engine rotational speed (Ne), a vehicle running speed (VS) and a blower voltage (BLV).

$$Icfftrq = f(Trqffc, Tamb, Ne, VS, BLV)$$

Where, the torque feedforward target value (Trqffc) is calculated by the following equation, referring to a torque target value (Trqr).

$$Trqffc = (TL2 \times Trqr + Tc2 \times Trqffc \text{ (a previous value)})/(Tc2 + TL2)$$

Where,

TL2: control cycle
Tc2: torque feedforward designation value

(4) Torque estimation means (torque recognition means):

A compressor torque estimation value (Trqc) at the present time is calculated by the following equation, referring to a high pressure-side pressure (Pd), an outside temperature (Tamb), an engine rotational speed (Ne), a vehicle running speed (VS) and a blower voltage (BLV).

$$Trqc = f(Pd, Tamb, Ne, VS, BLV)$$

Where, it is possible to employ another torque estimation method.

Further, in a case where means capable of detecting a compressor torque at the present time is provided, it is possible to employ the recognition value thereof.

Further, as shown in Example 2 depicted in Fig. 3, it is possible to calculate the torque estimation value (Trqc) at the present time by the following equation, referring to a cooler exit air temperature (Teva), an outside air temperature (Tamb), an engine rotational speed (Ne), a vehicle running speed (VS) and a blower voltage (BLV).

$$Trqc = f(Teva, Tamb, Ne, VS, BLV)$$

(5) Torque feedback control input calculation means:

The torque feedback control input value (Icfbtrq) is calculated by the following proportional and integral calculations, referring to a value of torque target response (Trqf) and a torque estimated value (Trqc).

$$Icfbtrq = Ptr \text{ (calculated proportional value)} + Itr \text{ (calculated integral value)}$$

Where, Ptr and Itr are calculated by the following equations.

$$Ptr = Kptr \times (Trqf - Trqc)$$

$$Itr = Itrn-1 + Kptr/Kitr \times (Trqf - Trqc)$$

Kptr: proportional gain
Kitr: integral time
Itrn-1: previous calculated value of Itr

(6) Compressor displacement control means:

A compressor displacement control signal (ECV-sig) is calculated by the following equation as the sum of torque feedforward control input (Icfftrq) and torque feedback control input (Icfbtrq).

$$ECV\text{-}sig = Icfftrq + Icfbtrq$$

In a case where a clutch is included, the clutch is controlled referring to ECV-sig.

The displacement control signal (ECV-sig) is sent to the displacement controller, and the clutch signal is sent to the clutch controller.

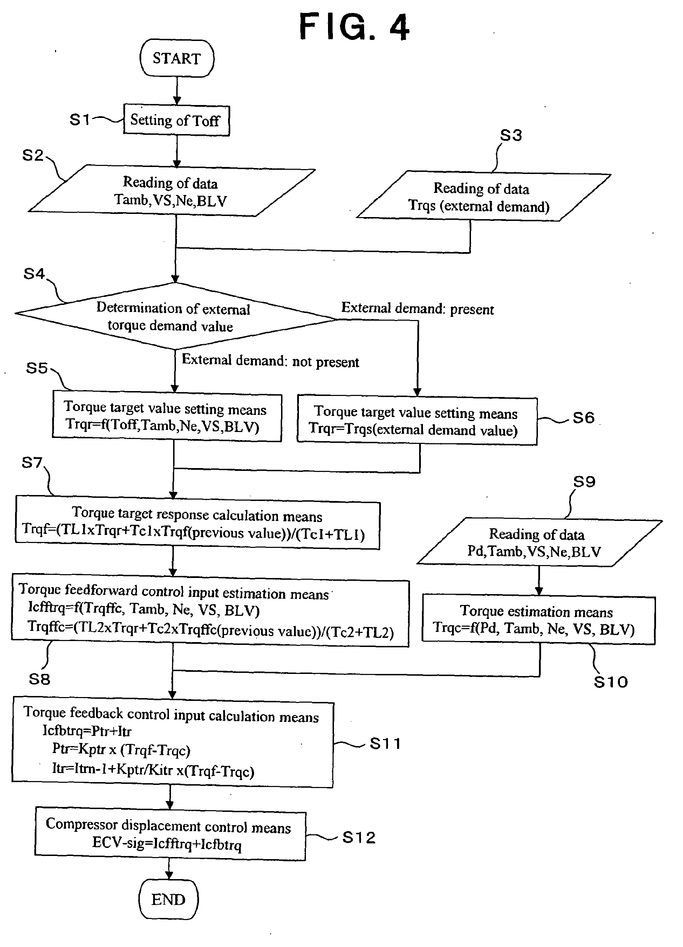

Hereinafter, an example of a method for controlling the compressor displacement of the refrigeration cycle (cooler temperature and compressor torque) based on the above-described calculated values for the control will be explained, referring to a control flow shown in Fig. 4.

In the control flow shown in Fig. 4, cooler exit air temperature target value (Toff) is set at step S1. Data of outside air temperature (Tamb), engine rotational speed (Ne), vehicle running speed (VS) and blower voltage (BLV) are read at step S2. In a case of external demand (Trqs), the data of the demand is read (step S3).

The external torque control demand value is determined at step S4. In a case where the external demand value is not present, a torque target value (Trqr) is calculated and set by the torque target value setting means at step S5, by the following equation as aforementioned.

$$Trqr = f(Toff, Tamb, Ne, VS, BLV)$$

In a case where the external demand value is present, as aforementioned, the external demand value (Trqs) is set as the torque target value (Trqr) (step S6).

The value of torque target response (Trqf) is calculated by the torque target response calculation means at step S7, and torque feedforward control input (Icfftrq) is calculated by the torque feedforward control input estimation means at step S8.

At step 9, as aforementioned, data of high pressure-side pressure (Pd), outside temperature (Tamb), engine rotational speed (Ne), vehicle running speed (VS) and blower voltage (BLV) are read, and at step 10, referring to these data, a compressor torque estimation value (Trqc) at the present time is calculated by the torque estimation means, by the following equation as aforementioned (Example 1).

$$\text{Trqc} = f(\text{Pd, Tamb, Ne, VS, BLV})$$

In Example 2, however, data of cooler exit air temperature (Teva), outside air temperature (Tamb), engine rotational speed (Ne), vehicle running speed (VS) and blower voltage (BLV) are read, and at step 10, referring to these data, a compressor torque estimation value (Trqc) at the present time is calculated by the torque estimation means, by the following equation as aforementioned.

$$\text{Trqc} = f(\text{Teva, Tamb, Ne, VS, BLV})$$

At step 11, as aforementioned, torque feedback control input value (Icfbtrq) is calculated by the torque feedback control input calculation means.

At step 12, as aforementioned, compressor displacement control signal (ECV-sig) is calculated by the compressor displacement control means, referring to the sum of torque feedforward control input (Icfftrq) and torque feedback control input (Icfbtrq), and it is inputted into the displacement controller. However, in a case where a clutch is included, the clutch is controlled referring to the signal of ECV-sig.

Where, in a case where an external torque demand is inputted at the above-described step S3, it is possible that the external torque demand is referred at step S6 and at the following steps only the torque is controlled.

Further, it is possible that, at the above-described step S7, in the calculation of a torque target response value, a response property different from that at a usual control is employed by changing the torque response designation value, which is a parameter with respect to the response property, by input of the external torque demand. For example, in a case where it is required to reduce the torque rapidly, it is possible to change the torque response designation value to an appropriate value.

Thus, the control device according to the first embodiment of the present invention can be applied to any control device for estimating a control amount from a detected amount different from the control amount of a control object at the time of calculating and outputting a control input value in accordance with a target value and controlling the control object, and particularly, it is suitable to a torque control of a compressor in a refrigeration cycle of an air conditioning system for vehicles.

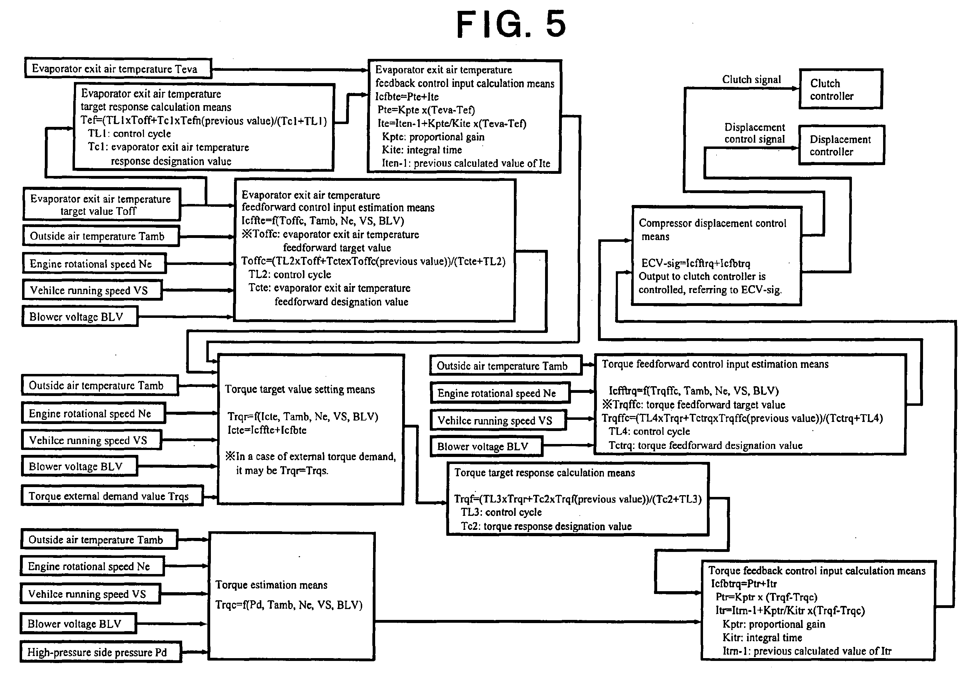

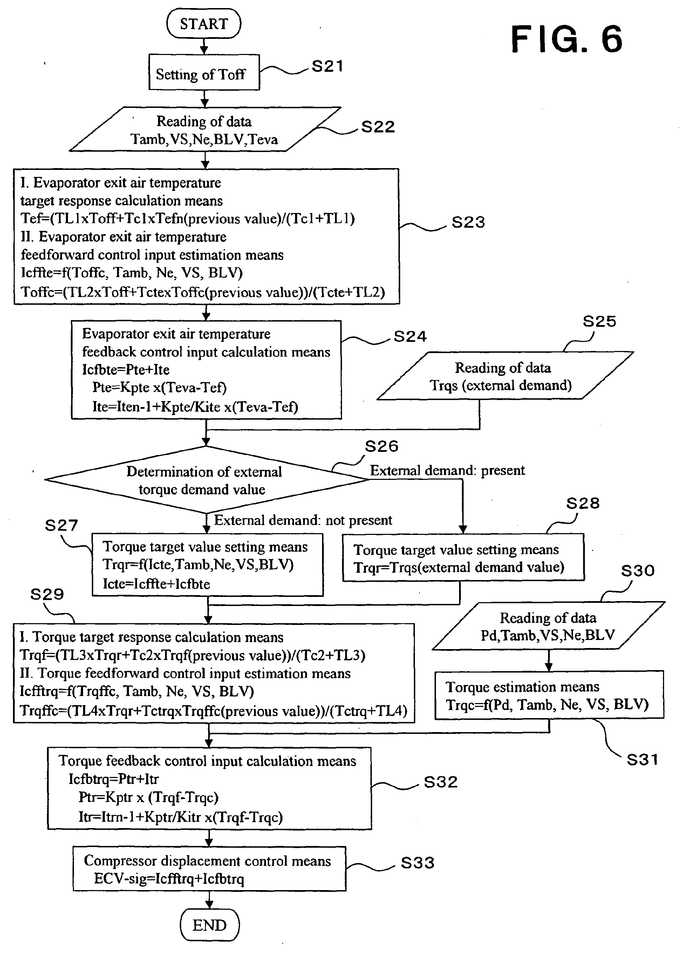

In a second embodiment of the present invention, using the system shown in Fig. 1, the control is performed, for example, as shown in Figs. 5 and 6. In this embodiment, as described below, control of an evaporator exit air temperature and control of a compressor torque can be both carried out. First, the control will be explained referring mainly to Fig. 5.

(1) Evaporator exit air temperature target response calculation means:

A value of an evaporator exit air temperature target response (Tef) is calculated by the following equation, referring to an evaporator exit air temperature target value (Toff).

$$\text{Tef} = (\text{TL1} \times \text{Toff} + \text{Tc1} \times \text{Tef (a previous value)})/(\text{Tc1} + \text{TL1})$$

Where,

TL1: control cycle

Tc1 : evaporator exit air temperature response designation value

(2) Evaporator exit air temperature feedforward control input estimation means:

The evaporator exit air temperature feedforward control input (Icffte) is estimated by the following equation, referring to an evaporator exit air temperature feedforward target value (Toffc), an outside air temperature (Tamb), a vehicle running speed (VS), a blower voltage (BLV) and an engine rotational speed (Ne).

$$\mathrm{Icffte} = f(\mathrm{Toffc},\ \mathrm{Tamb},\ \mathrm{Ne},\ \mathrm{VS},\ \mathrm{BLV})$$

Where, the evaporator exit air temperature feedforward target value (Toffc) is calculated by the following equation, referring to an evaporator exit air temperature target value (Toff).

$$\mathrm{Toffc} = (\mathrm{TL2} \times \mathrm{Toff} + \mathrm{Tcte} \times \mathrm{Toffc}\ (\text{a previous value})/(\mathrm{Tff}+\mathrm{TL2})$$

Where,

TL2: control cycle
Tcte: evaporator exit air temperature feedforward designation value

(3) Evaporator exit air temperature feedback control input calculation means:

The evaporator exit air temperature feedback control input(Icfbte) is calculated by the following proportional and integral calculations, referring to a value of evaporator exit air temperature target response (Tef) and an evaporator exit air temperature (Teva).

$$\mathrm{Icfbte} = \mathrm{Pte}\ (\text{calculated proportional value}) + \mathrm{Ite}\ (\text{calculated integral value})$$

Where, Pte and Ite are calculated by the following equations.

$$\mathrm{Pte} = \mathrm{Kpte} \times (\mathrm{Teva} - \mathrm{Tef})$$

$$\mathrm{Ite} = \mathrm{Ite}_{n-1} + \mathrm{Kpte}/\mathrm{Kite} \times (\mathrm{Teva} - \mathrm{Tef})$$

Kpte: proportional gain
Kite: integral time
Iten-1: previous calculated value of Ite

(4) Torque target value setting means:

The torque target value (Trqr) is calculated by the following equation, referring to the sum of a value of evaporator exit air temperature feedforward control input (Icffte) and a value of evaporator exit air temperature feedback control input (Icfbte), an outside air temperature (Tamb), an engine rotational speed (Ne), a vehicle running speed (VS) and a blower voltage (BLV).

$$Trqr = f(Icte, Tamb, Ne, VS, BLV)$$

$$Icte = Icffte + Icfbte$$

Alternatively, a demand from a vehicle side may be used as the torque target value.

(5) Torque target response calculation means:

A value of torque target response (Trqf) is calculated by the following equation, referring to torque target value (Trqr).

$$Trqf = (TL3 \times Trqr + Tc2 \times Trqf \text{ (a previous value)})/(Tc2 + TL3)$$

Where,

TL3: control cycle
Tc2: torque response designation value

(6) Torque feedforward control input estimation means:

The torque feedforward control input (Icfftrq) is estimated by the following equation, referring to a torque feedforward target value (Trqffc), an outside temperature (Tamb), an engine rotational speed (Ne), a vehicle running speed (VS) and a blower voltage (BLV).

$$Icfftrq = f(Trqffc, Tamb, Ne, VS, BLV)$$

Where, the torque feedforward target value (Trqffc) is calculated by the following equation, referring to a torque target value (Trqr).

$$Trqffc = (TL4 \times Trqr + Tctrq \times Trqffc \text{ (a previous value)})/(Tctrq + TL4)$$

Where,

TL4: control cycle
Tctrq: torque feedforward designation value

(7) Torque estimation means (torque recognition means):

A compressor torque estimation value (Trqc) at the present time is calculated by the following equation, referring to a high pressure-side pressure (Pd), an outside temperature (Tamb), an engine rotational speed (Ne), a vehicle running speed (VS) and a blower voltage (BLV).

$$Trqc = f(Pd, Tamb, Ne, VS, BLV)$$

Where, it is possible to employ another torque estimation method.

(8) Torque feedback control input calculation means:

The torque feedback control input value (Icfbtrq) is calculated by the following proportional and integral calculations, referring to a value of torque target response (Trqf) and a torque estimated value (Trqc).

$$Icfbtrq = Ptr \text{ (calculated proportional value)} + Itr \text{ (calculated integral value)}$$

Where, Ptr and Itr are calculated by the following equations.

$$Ptr = Kptr \times (Trqf - Trqc)$$

$$Itr = Itrn\text{-}1 + Kptr/Kitr \times (Trqf - Trqc)$$

Kptr: proportional gain
Kitr: integral time
Itrn-1: previous calculated value of Itr

(9) Compressor displacement control means:

A compressor displacement control signal (ECV-sig) is calculated by the following equation as the sum of torque feedforward control input (Icfftrq) and torque feedback control input (Icfbtrq).

$$ECV\text{-}sig = Icfftrq + Icfbtrq$$

In a case where a clutch is included, the clutch is controlled referring to ECV-sig.

Hereinafter, an example of a method for controlling the compressor displacement of the refrigeration cycle (evaporator temperature and compressor torque) based on the above-described calculated values for the control will be explained, referring to a control flow shown in Fig. 6.

In the control flow shown in Fig. 6, evaporator exit air temperature target value (Toff) is set at step S21. Data of outside air temperature (Tamb), vehicle running speed (VS), engine rotational speed (Ne), blower voltage (BLV) and evaporator exit air temperature (Teva) are read at step S22.

At step S23, the value of evaporator exit air temperature target response (Tef) is calculated by the evaporator exit air temperature target response calculation means, and evaporator exit air temperature feedforward control input (Icffte) is calculated by the evaporator exit air temperature feedforward control input estimation means, referring also to evaporator exit air temperature feedforward target value (Toffc).

At step S24, the value of evaporator exit air temperature feedback control input (Icfbte) is calculated by the evaporator exit air temperature feedback control input calculation means.

In a case of using an external demand (Trqs) for the torque control, the data of the demand is read (step S25). After the external torque control demand value is determined at step S26, in a case where the external demand value is not present, a torque target value (Trqr) is calculated and set by the torque target value setting means at step S27, and in a case where the external demand value is present, the external demand value (Trqs) is set as the torque target value (Trqr) at step S28.

At step 29, the value of torque target response (Trqf) is calculated by the torque target response calculation means, and torque feedforward control input (Icfftrq) is calculated by the torque feedforward control input estimation means.

At step 30, data of high pressure-side pressure (Pd), outside temperature (Tamb), engine rotational speed (Ne), vehicle running speed (VS) and blower voltage (BLV), which are necessary to estimate a torque, are read, and at step 31, referring to these data, a compressor torque estimation value (Trqc) at the present time is calculated by the torque estimation means.

At step 32, torque feedback control input value (Icfbtrq) is calculated by the torque feedback control input calculation means.

At step 33, compressor displacement control signal (ECV-sig) is calculated by the compressor displacement control means, referring to the sum of torque feedforward control input (Icfftrq) and torque feedback control input (Icfbtrq), and it is inputted into the displacement controller. However, in a case where a clutch is included, the clutch is controlled referring to the compressor displacement control signal (ECV-sig).

Where, in a case where an external torque demand is inputted from outside, it is possible that the external torque demand is referred at step S28 and at the following steps only the torque is controlled. Further, it is possible that, at the above-described step S29, in the calculation of a torque target response value, a response property different from that at a usual control is employed by changing the torque response designation value, which is a parameter with respect to the response property, by input of the external torque demand.

Thus, in the above-described second embodiment of the present invention, the evaporator temperature and the compressor torque can be both controlled, and respective target responses are given in both controls, and therefore, it may be possible to control the respective control objects to respective target values with respective desirable response properties, without overshooting and response delay. Further, because the torque can be controlled by using estimation step, torque shock may be reduced and the torque may be more stabilized, and besides, because the stability of the evaporator temperature is ensured properly, the drivability of a vehicle and the comfortableness in air conditioning may both stand.

The control device according to the second embodiment of the present invention can be applied to any control device required to control a plurality of control amounts with desirable response properties, respectively, and particularly, it is suitable to a temperature control of an evaporator and a torque control of a compressor in a refrigeration cycle of an air conditioning system for vehicles.

**Claims**

1.  A control device including a control object control means for operating a control object based on a control input and controlling a control amount of said control object, a control object control amount estimation means for estimating a control amount of said control object, a control object control amount target value setting means for setting a control amount target value of said control object, a control input calculation means for calculating a control input to be inputted into said control object, a control object control amount target response calculation means for calculating and designating a target response in a transient state at which said control amount of said control object reaches said control amount target value, a control object control amount feedback control input calculation means for calculating a feedback control input referring to a deviation between a value of said control object control amount target response and said control amount of said control object, and a control object feedforward control input calculation means for calculating a feedforward control input necessary to realize a transient state in a target response calculated by said control object control amount target response calculation means, **characterized in that** said control amount target value of said control object is set by said control object control amount target value setting means, said value of said control amount target response is calculated by said control object control amount target response calculation means, said feedback control input is calculated by said control object control amount feedback control input calculation means referring to said value of said control amount target response and said control amount estimated by said control object control amount estimation means, said feedforward control input is calculated by said control object feedforward control input calculation means, said control input is calculated by said control input calculation means referring to the sum of said feedback control input and said feedforward control input, and said control amount of said control object is controlled by said control object control means.

2.  The control device according to claim 1, wherein said control object control amount estimation means estimates said control amount of said control object from a physical value having a correlation with said control amount of said control object.

3.  A compressor torque control device including a refrigeration cycle having a variable displacement compressor for refrigerant whose displacement is controlled by an external control signal, a condenser for condensing high-temperature and high-pressure refrigerant and an evaporator for refrigerant for functioning as a cooler cooling air blown into a room interior, a blower for sending air to said evaporator, a displacement control means for controlling the displacement of said compressor, a displacement control signal calculation means for calculating a displacement control signal sent to said displacement control means, a torque target value setting means for calculating and setting a torque target value of said compressor, a torque recognition means for estimating or detecting a torque of said compressor, a torque target response calculation means for calculating and designating a target response in a transient state at which said torque of said compressor reaches said torque target value, a torque feedback control input calculation means for calculating a torque feedback control input referring to a recognized torque value of said compressor and a value of said torque target response, and a torque feedforward control input calculation means for calculating a torque feedforward control input necessary to realize a transient state in a target response calculated by said torque target response calculation means, **characterized in that** said torque target value of said compressor is set by said torque target value setting means, said value of said torque target response is calculated by said torque target response calculation means, said torque feedback control input is calculated by said torque feedback control input calculation means referring to a deviation between said value of said torque target response and said recognized torque value estimated or detected by said torque recognition means, said torque feedforward control input is calculated by said torque feedforward control input calculation means, a control input for controlling said displacement of said compressor is calculated by said displacement control signal calculation means referring to the sum of said torque feedback control input and said torque feedforward control input, and outputted to said displacement control means, and a torque of said compressor as a control amount is controlled by said displacement control means.

4. The compressor torque control device according to claim 3, wherein said torque recognition means estimates said torque of said compressor from a physical value having a correlation with said torque of said compressor.

5. The compressor torque control device according to claim 4, wherein said torque recognition means estimates said torque of said compressor from a thermal load of said refrigeration cycle and a physical value having a correlation with said torque of said compressor.

6. The compressor torque control device according to any of claims 3 to 5, wherein said torque target value setting means calculates said torque target value referring to a target temperature of said evaporator and a thermal load of said refrigeration cycle.

7. The compressor torque control device according to any of claims 3 to 6, wherein said torque target value setting means sets said torque target value referring to a torque demand from a vehicle.

8. The compressor torque control device according to claim 7, wherein, when said torque target value of said compressor is set referring to a torque demand from a vehicle, the method for calculating said value of said torque target response in said torque target response calculation means is changed to a method different from that at a usual time, and a target transient response for torque is changed to a transient response different from that at a usual time.

9. The compressor torque control device according to any of claims 4 to 8, wherein said physical value having a correlation with said torque of said compressor is at least one of a compressor discharge pressure, a condenser entrance pressure, a condenser exit pressure, an evaporator temperature and an evaporator exit air temperature.

10. The compressor torque control device according to any of claims 5 to 9, wherein said thermal load of said refrigeration cycle is determined by detecting all of or at least one of a physical value having a correlation with an outside air temperature, a physical value having a correlation with an amount of air sent to said evaporator, a physical value having a correlation with a running speed of a vehicle, a physical value having a correlation with a rotational speed of a drive source for a vehicle and a physical value having a correlation with an amount of air sent to said condenser.

11. The compressor torque control device according to any of claims 3 to 10, wherein said variable displacement compressor is a variable displacement compressor controlled by controlling a displacement control signal or a variable displacement compressor controlled by controlling its rotational speed.

12. A control device including a control object control means for operating a control object based on a control input and controlling a control amount of said control object, a control object first control amount detection means for detecting a first control amount of said control object, a control object second control amount estimation means for estimating or detecting a second control amount of said control object, a control object first control amount target value setting means for setting a first control amount target value of said control object, a control object second control amount target value setting means for setting a second control amount target value of said control object, a control input calculation means for calculating a control input to be inputted into said control object, a control object first control amount target response calculation means for calculating and designating a target response in a transient state at which said first control amount of said control object reaches said first control amount target value, a control object first control amount feedback control input calculation means for calculating a feedback first control input referring to a deviation between a value of said control object first control amount target response and said first control amount of said control object, a control object second control amount feedback control input calculation means for calculating a feedback second control input referring to a deviation between said second control amount target value of said control object and said second control amount of said control object, a control object first feedforward control input calculation means for calculating a feedforward first control input necessary to realize a transient state in a target response calculated by said control object first control amount target response calculation means, and a control object second feedforward control input calculation means for calculating a feedforward second control input necessary to realize said second control amount target value calculated by said control object second control amount target value setting means, **characterized in that** said first control amount target value of said control object is set by said control object first control amount target value setting means, said value of said first control amount target response is calculated by said control object first control amount target response calculation means, said feedback first control input is calculated by said control object first control amount feedback control input calculation means referring to said value of said first control amount target response and said first control amount detected by said control object first control amount detection means, said feedforward first control input is calculated by said control object first feedforward control input calculation means, said second control amount target value of said control object is set by said control object second control amount target value setting means referring to the sum of said feedback first control input and said feedforward first control input, said feedback second control input is calculated by said control object second control amount feedback control input calculation means referring to said second control amount target value and said second control amount estimated or detected by said control object second control amount estimation means, said feedforward second control input is calculated by said control object second feedforward control input calculation means, said control input is calculated by said control input calculation means referring to the sum of said feedback second control input and said feedforward second control input, and said first and second control amounts of said control object are controlled by said control object control means.

13. A control device including a control object control means for operating a control object based on a control input and controlling a control amount of said control object, a control object first control amount detection means for detecting a first control amount of said control object, a control object second control amount estimation means for estimating or detecting a second control amount of said control object, a control object first control amount target value setting means for setting a first control amount target value of said control object, a control object second control amount target value setting means for setting a second control amount target value of said control object, a control input calculation means for calculating a control input to be inputted into said control object, a control object first control amount target response calculation means for calculating and designating a target response in a transient state at which said first control amount of said control object reaches said first control amount target value, a control object second control amount target response calculation means for calculating and designating a target response in a transient state at which said second control amount of said control object reaches said second control amount target value, a control object first control amount feedback control input calculation means for calculating a feedback first control input referring to a deviation between a value of said control object first control amount target response and said first control amount of said control object, a control object second control amount feedback control input calculation means for calculating a feedback second control input referring to a deviation between a value of said control object second control amount target response and said second control amount of said control object, a control object first feedforward control input calculation means for calculating a feedforward first control input necessary to realize a transient state in a target response calculated by said control object first control amount target response calculation means, and a control object second feedforward control input calculation means for calculating a feedforward second control input necessary to realize a transient state in a target response calculated by said control object second control amount target response calculation means, **characterized in that** said first control amount target value of said control object is set by said control object first control amount target value setting means, said value of said first control amount target response is calculated by said control object first control amount target response calculation means, said feedback first control input is calculated by said control object first control amount feedback control input calculation means referring to said value of said first control amount target response and said first control amount detected by said control object first control amount detection means, said feedforward first control input is calculated by said control object first feedforward control input calculation means, said second control amount target value of said control object is set by said control object second control amount target value setting means referring to the sum of said feedback first control input and said feedforward first control input, said value of said second control amount target response is calculated by said control object second control amount target response calculation means, said feedback second control input is calculated by said control object second control amount feedback control input calculation means referring to said value of said second control amount target response and said second control amount estimated or detected by said control object second control amount estimation means, said feedforward second control input is calculated by said control object second feedforward control input calculation means, said control input is calculated by said control input calculation means referring to the sum of said feedback second control input and said feedforward second control input, and said first and second control amounts of said control object are controlled by said control object control means.

14. The control device according to claim 12 or 13, wherein said control object second control amount estimation means estimates said second control amount of said control object from a physical value having a correlation with said second control amount of said control object.

15. A refrigeration cycle control device including a refrigeration cycle having a variable displacement compressor for refrigerant whose displacement is controlled by an external control signal, a condenser for condensing high-temperature and high-pressure refrigerant and an evaporator for refrigerant for functioning as a cooler cooling air blown into a room interior, a blower for sending air to said evaporator, an evaporator target temperature setting means for setting a target temperature of said evaporator, an evaporator temperature detection means for detecting an evaporator temperature or an evaporator exit air temperature, an evaporator temperature control means for controlling an evaporator temperature, an evaporator temperature target response calculation means for calculating and designating a target response in a transient state at which said evaporator temperature or evaporator exit air temperature reaches said target temperature of said evaporator, an evaporator temperature feedback control input calculation means for calculating an evaporator temperature feedback control input referring to a deviation between a value of said evaporator temperature target response and said evaporator temperature or evaporator exit air temperature, an evaporator temperature feedforward control input estimation means for estimating an evaporator temperature feedforward control input necessary to realize a transient state in a target response calculated by said evaporator temperature target response calculation means, a torque target value setting means for calculating and setting a torque target value of said compressor, a torque recognition means for estimating or detecting a torque of said compressor, a torque feedback control input calculation means for calculating a torque feedback control input of said compressor referring to a recognized torque value of said compressor and a torque target value of said compressor, a torque feedforward control input estimation means for estimating a torque feedforward control input of said compressor necessary to realize a torque target value calculated by said torque target value setting means, a displacement control means for controlling the displacement of said compressor, and a displacement control signal calculation means for calculating a displacement control signal sent to said displacement control means, **characterized in that** said target temperature of said evaporator is set by said evaporator target temperature setting means, said value of said evaporator temperature target response is calculated by said evaporator temperature target response calculation means, said evaporator temperature feedback control input is calculated by said evaporator temperature feedback control input calculation means referring to a deviation between said value of said evaporator temperature target response and said evaporator temperature or evaporator exit air temperature detected by said evaporator temperature detection means, said evaporator temperature feedforward control input is estimated by said evaporator temperature feedforward control input estimation means, said torque target value is calculated and set by said torque target value setting means referring to the sum of said evaporator temperature feedback control input and said evaporator temperature feedforward control input, said torque feedback control input is calculated by said torque feedback control input calculation means referring to said torque target value and said recognized torque value of said compressor estimated or detected by said torque recognition means, said torque feedforward control input is calculated by said torque feedforward control input calculation means, a control input for controlling said displacement of said compressor is calculated by said displacement control signal calculation means referring to the sum of said torque feedback control input and said torque feedforward control input, and outputted to said displacement control means, and an evaporator temperature or an evaporator exit air temperature and a torque of said compressor are controlled as control amounts.

16. A refrigeration cycle control device including a refrigeration cycle having a variable displacement compressor for refrigerant whose displacement is controlled by an external control signal, a condenser for condensing high-temperature and high-pressure refrigerant and an evaporator for refrigerant for functioning as a cooler cooling air blown into a room interior, a blower for sending air to said evaporator, an evaporator target temperature setting means for setting a target temperature of said evaporator, an evaporator temperature detection means for detecting an evaporator temperature or an evaporator exit air temperature, an evaporator temperature control means for controlling an evaporator temperature, an evaporator temperature target response calculation means for calculating and designating a target response in a transient state at which said evaporator temperature or evaporator exit air temperature reaches said target temperature of said evaporator, an evaporator temperature feedback control input calculation means for calculating an evaporator temperature feedback control input referring to a deviation between a value of said evaporator temperature target response and said evaporator temperature or evaporator exit air temperature, an evaporator temperature feedforward control input estimation means for estimating an evaporator temperature feedforward control input necessary to realize a transient state in a target response calculated by said evaporator temperature target response calculation means, a torque target value setting means for calculating and setting a torque target value of said compressor, a torque target response calculation means for calculating and designating a target response in a transient state at which said torque of said compressor reaches said torque target value, a torque recognition means for estimating or detecting a torque of said compressor, a torque feedback control input calculation means for calculating a torque feedback control input of said compressor referring to a recognized torque value of said compressor and a value of said torque target response of said compressor, a torque feedforward control input estimation means for estimating a torque feedforward control input of said compressor necessary to realize a transient state in a target response calculated by said torque target response calculation means, a displacement control means for controlling the displacement of said compressor, and a displacement control signal calculation means for calculating a displacement control signal sent to said displacement control means, **characterized in that** said target temperature of said evaporator is set by said evaporator target temperature setting means, said value of said evaporator temperature target response is calculated by said evaporator temperature target response calculation means, said evaporator temperature feedback control input is calculated by said evaporator temperature feedback control input calculation means referring to a deviation between said value of said evaporator temperature target response and said evaporator temperature or evaporator exit air temperature detected by said evaporator temperature detection means, said evaporator temperature feedforward control input is estimated by said evaporator temperature feedforward control input estimation means, said torque target value is calculated and set by said torque target value setting means referring to the sum of said evaporator temperature feedback control input and said evaporator temperature feedforward control input, said value of said torque target response is calculated by said torque target response calculation means, said torque feedback control input is calculated by said torque feedback control input calculation means referring to said value of said torque target response and said recognized torque value of said compressor estimated or detected by said torque recognition means, said torque feedforward control input is calculated by said torque feedforward control input calculation means, a control input for controlling said displacement of said compressor is calculated by said displacement control signal calculation means referring to the sum of said torque feedback control input and said torque feedforward control input, and outputted to said displacement control means, and an evaporator temperature or an evaporator exit air temperature and a torque of said compressor are controlled as control amounts.

17. The refrigeration cycle control device according to claim 15 or 16, wherein said torque recognition means estimates said torque of said compressor from a physical value having a correlation with said torque of said compressor.

18. The refrigeration cycle control device according to claim 17, wherein said torque recognition means estimates said torque of said compressor from a thermal load of said refrigeration cycle and a physical value having a correlation with said torque of said compressor.

19. The refrigeration cycle control device according to any of claims 15 to 18, wherein said torque target value setting means sets said torque target value referring to the sum of said evaporator temperature feedback control input and said evaporator temperature feedforward control input and a thermal load of said refrigeration cycle.

20. The refrigeration cycle control device according to any of claims 15 to 19, wherein said torque target value setting means sets said torque target value referring to a torque demand from a vehicle.

21. The refrigeration cycle control device according to claim 20, wherein, when said torque target value of said compressor is set referring to a torque demand from a vehicle, the method for calculating said value of said torque target response in said torque target response calculation means is changed to a method different from that at a usual time, and a target transient response for torque is changed to a transient response different from that at a usual time.

22. The refrigeration cycle control device according to any of claims 17 to 21, wherein said physical value having a correlation with said torque of said compressor is at least one of a compressor discharge pressure, a condenser entrance pressure, a condenser exit pressure, an evaporator temperature and an evaporator exit air temperature.

23. The refrigeration cycle control device according to any of claims 18 to 22, wherein said thermal load of said refrigeration cycle is determined by detecting all of or at least one of a physical value having a correlation with an outside air temperature, a physical value having a correlation with an amount of air sent to said evaporator, a physical value having a correlation with a running speed of a vehicle, a physical value having a correlation with a rotational speed of a drive source for a vehicle and a physical value having a correlation with an amount of air sent to said condenser.

24. The refrigeration cycle control device according to any of claims 15 to 23, wherein said variable displacement

EP 1 640 195 A2

compressor is a variable displacement compressor controlled by controlling a displacement control signal or a variable displacement compressor controlled by controlling its rotational speed.

19

FIG. 1

Pressure sensor signal

Clutch signal

Displacement control signal

Main controller

EP 1 640 195 A2

FIG. 2

Torque external demand value Trqs

Cooler exit air temperature target value Toff

Outside air temperature Tamb

Engine rotational speed Ne

Vehilce running speed VS

Blower voltage BLV

Torque target value setting means

Trqr=f(Toff, Tamb, Ne, VS, BLV)

※In a case of external torque demand, it may be Trqr=Trqs.

Outside air temperature Tamb

Engine rotational speed Ne

Vehilce running speed VS

Blower voltage BLV

Torque feedforward control input estimation means

Icfftrq=f(Trqffc, Tamb, Ne, VS, BLV)
※Trqffc: torque feedforward target value
Trqffc=(TL2xTrqr+Tc2xTrqffc(previous value))/(Tc2+TL2)
 TL2: control cycle
 Tc2: torque feedforward designation value

Torque target response calculation means

Trqf=(TL1xTrqr+Tc1xTrqf(previous value))/(Tc1+TL1)
 TL1: control cycle
 Tc1: torque response designation value

Compressor displacement control means

ECV-sig=Icfftrq+Icfbtrq

Output to clutch controller is controlled, referring to ECV-sig.

Clutch signal

Clutch controller

Displacement control signal

Displacement controller

Outside air temperature Tamb

Engine rotational speed Ne

Vehilce running speed VS

Blower voltage BLV

High-pressure side pressure Pd

Torque estimation means

Trqc=f(Pd, Tamb, Ne, VS, BLV)

Torque feedback control input calculation means

Icfbtrq=Ptr+Itr
 Ptr=Kptr x (Trqf-Trqc)
 Itr=Itrn-1+Kptr/Kitr x(Trqf-Trqc)
 Kptr: proportional gain
 Kitr: integral time
 Itrn-1: previous calculated value of Itr

EP 1 640 195 A2

# FIG. 3

| Torque external demand value Trqs |
| Cooler exit air temperature target value Toff |
| Outside air temperature Tamb |
| Engine rotational speed Ne |
| Vehilce running speed VS |
| Blower voltage BLV |

Torque target value setting means

Trqr=f(Toff, Tamb, Ne, VS, BLV)

※In a case of external torque demand, it may be Trqr=Trqs.

| Outside air temperature Tamb |
| Engine rotational speed Ne |
| Vehilce running speed VS |
| Blower voltage BLV |

Torque feedforward control input estimation means

Icfftrq=f(Trqffc, Tamb, Ne, VS, BLV)
※Trqffc: torque feedforward target value
Trqffc=(TL2xTrqr+Tc2xTrqffc(previous value))/(Tc2+TL2)
TL2: control cycle
Tc2: torque feedforward designation value

Compressor displacement control means

ECV-sig=Icfftrq+Icfbtrq

Output to clutch controller is controlled, referring to ECV-sig.

Torque target response calculation means

Trqf=(TL1xTrqr+Tc1xTrqf(previous value))/(Tc1+TL1)
TL1: control cycle
Tc1: torque response designation value

| Outside air temperature Tamb |
| Engine rotational speed Ne |
| Vehilce running speed VS |
| Blower voltage BLV |
| Evaporator exit air temperature Teva |

Torque estimation means

Trqc=f(Pd, Tamb, Ne, VS, BLV)

Torque feedback control input calculation means

Icfbtrq=Ptr+Itr
Ptr=Kptr x (Trqf-Trqc)
Itr=Itrn-1+Kptr/Kitr x(Trqf-Trqc)
Kptr: proportional gain
Kitr: integral time
Itrn-1: previous calculated value of Itr

| Clutch signal | Clutch controller |
| Displacement control signal | Displacement controller |

EP 1 640 195 A2

# FIG. 4

START

S1 — Setting of Toff

S2 — Reading of data
Tamb,VS,Ne,BLV

S3 — Reading of data
Trqs (external demand)

S4 — Determination of external
torque demand value

External demand: present

External demand: not present

S5 — Torque target value setting means
Trqr=f(Toff,Tamb,Ne,VS,BLV)

S6 — Torque target value setting means
Trqr=Trqs(external demand value)

S7 — Torque target response calculation means
Trqf=(TL1xTrqr+Tc1xTrqf(previous value))/(Tc1+TL1)

S9 — Reading of data
Pd,Tamb,VS,Ne,BLV

Torque feedforward control input estimation means
Icfftrq=f(Trqffc, Tamb, Ne, VS, BLV)
Trqffc=(TL2xTrqr+Tc2xTrqffc(previous value))/(Tc2+TL2)

S8

S10 — Torque estimation means
Trqc=f(Pd, Tamb, Ne, VS, BLV)

Torque feedback control input calculation means
Icfbtrq=Ptr+Itr
Ptr=Kptr x (Trqf-Trqc)
Itr=Itrn-1+Kptr/Kitr x(Trqf-Trqc)

S11

Compressor displacement control means
ECV-sig=Icfftrq+Icfbtrq

S12

END

# FIG. 5

Evaporator exit air temperature Teva

Evaporator exit air temperature
target response calculation means
Tef=(TL1xToff+Tc1xTefn(previous value)/(Tc1+TL1)
TL1: control cycle
Tc1: evaporator exit air temperature
response designation value

Evaporator exit air temperature
feedback control input calculation means
Icfbte=Pte+Ite
Pte=Kpte x(Teva-Tef)
Ite=Iten-1+Kpte/Kite x(Teva-Tef)
Kpte: proportional gain
Kite: integral time
Iten-1: previous calculated value of Ite

Clutch signal → Clutch controller

Displacement
control signal → Displacement controller

Evaporator exit air temperature
target value Toff

Outside air temperature Tamb

Engine rotational speed Ne

Vehilce running speed VS

Blower voltage BLV

Evaporator exit air temperature
feedforward control input estimation means
Icffte=f(Toffc, Tamb, Ne, VS, BLV)
※Toffc: evaporator exit air temperature
feedforward target value
Toffc=(TL2xToff+TctexToffc(previous value))/(Tcte+TL2)
TL2: control cycle
Tcte: evaporator exit air temperature
feedforward designation value

Compressor displacement control
means

ECV-sig=Icfftrq+Icfbtrq
Output to clutch controller is
controlled, referring to ECV-sig.

Outside air temperature Tamb

Engine rotational speed Ne

Vehilce running speed VS

Blower voltage BLV

Torque external demand value Trqs

Torque target value setting means

Trqr=f(Icte, Tamb, Ne, VS, BLV)
Icte=Icffte+Icfbte

※In a case of external torque demand,
it may be Trqr=Trqs.

Outside air temperature Tamb

Engine rotational speed Ne

Vehilce running speed VS

Blower voltage BLV

Torque feedforward control input estimation means

Icfftrq=f(Trqffc, Tamb, Ne, VS, BLV)
※Trqffc: torque feedforward target value
Trqffc=(TL4xTrqr+TctrqxTrqffc(previous value))/(Tctrq+TL4)
TL4: control cycle
Tctrq: torque feedforward designation value

Torque target response calculation means

Trqf=(TL3xTrqr+Tc2xTrqf(previous value))/(Tc2+TL3)
TL3: control cycle
Tc2: torque response designation value

Outside air temperature Tamb

Engine rotational speed Ne

Vehilce running speed VS

Blower voltage BLV

High-pressure side pressure Pd

Torque estimation means

Trqc=f(Pd, Tamb, Ne, VS, BLV)

Torque feedback control input calculation means
Icfbtrq=Ptr+Itr
Ptr=Kptr x (Trqf-Trqc)
Itr=Itrn-1+Kptr/Kitr x(Trqf-Trqc)
Kptr: proportional gain
Kitr: integral time
Itrn-1: previous calculated value of Itr

EP 1 640 195 A2

# FIG. 6

START

Setting of Toff — S21

Reading of data
Tamb,VS,Ne,BLV,Teva — S22

I. Evaporator exit air temperature
target response calculation means
Tef=(TL1xToff+Tc1xTefn(previous value)/(Tc1+TL1)
II. Evaporator exit air temperature
feedforward control input estimation means
Icffte=f(Toffc, Tamb, Ne, VS, BLV)
Toffc=(TL2xToff+TctexToffc(previous value))/(Tcte+TL2) — S23

Evaporator exit air temperature
feedback control input calculation means
Icfbte=Pte+Ite
   Pte=Kpte x(Teva-Tef)
   Ite=Iten-1+Kpte/Kite x(Teva-Tef) — S24

S25
Reading of data
Trqs (external demand)

S26
Determination of external
torque demand value — External demand: present

External demand: not present

S27
Torque target value setting means
Trqr=f(Icte,Tamb,Ne,VS,BLV)
Icte=Icffte+Icfbte

S28
Torque target value setting means
Trqr=Trqs(external demand value)

S30
Reading of data
Pd,Tamb,VS,Ne,BLV

S29
I. Torque target response calculation means
Trqf=(TL3xTrqr+Tc2xTrqf(previous value))/(Tc2+TL3)
II. Torque feedforward control input estimation means
Icfftrq=f(Trqffc, Tamb, Ne, VS, BLV)
Trqffc=(TL4xTrqr+TctrqxTrqffc(previous value))/(Tctrq+TL4)

Torque estimation means
Trqc=f(Pd, Tamb, Ne, VS, BLV) — S31

Torque feedback control input calculation means
Icfbtrq=Ptr+Itr
   Ptr=Kptr x (Trqf-Trqc)
   Itr=Itrn-1+Kptr/Kitr x(Trqf-Trqc) — S32

Compressor displacement control means
ECV-sig=Icfftrq+Icfbtrq — S33

END